# EUROPÄISCHE PATENTSCHRIFT

(11) **EP 1 034 208 B1**
(45) Veröffentlichungstag und Bekanntmachung des Hinweises auf die Patenterteilung: **11.09.2002**
(21) Anmeldenummer: 98962391.3
(22) Anmeldetag: 24.11.1998
(51) Int. Cl.: C08G 69/00, C08G 69/16, B01D 11/02

(54) **VERFAHREN ZUR KONTINUIERLICHEN EXTRAKTION VON POLYAMID**
CONTINUOUS POLYAMIDE EXTRACTION PROCESS
PROCEDE POUR L'EXTRACTION EN CONTINU DE POLYAMIDE

(30) Priorität: 25.11.1997 DE 19752183
(43) Veröffentlichungstag der Anmeldung: 13.09.2000
(73) Patentinhaber: BASF AKTIENGESELLSCHAFT, 67056 Ludwigshafen (DE)
(72) Erfinder: ERBES, Jörg, D-67065 Ludwigshafen (DE); LUDWIG, Alfons, D-37671 Höxter (DE); PIPPER, Gunter, D-67098 Bad Dürkheim (DE)
(74) Vertreter: Kinzebach, Werner, Dr.
(86) Internationale Anmeldenummer: EP9807575
(87) Internationale Veröffentlichungsnummer: WO99026996

(56) Entgegenhaltungen:
- EP-A- 0 308 774
- CH-A- 363 639
- DD-A- 206 999
- DD-A- 289 471
- DE-A- 1 770 097
- DE-A- 4 324 616
- DE-A- 19 505 150
- DE-C- 425 503
- US-A- 3 751 362
- DATABASE WPI Section Ch, Week 7706 Derwent Publications Ltd., London, GB; Class A23, AN 77-10172y XP002094758 & JP 51 149397 A (UNITIKA LTD) , 21. Dezember 1976 in der Anmeldung erwähnt
- PATENT ABSTRACTS OF JAPAN vol. 010, no. 013 (C-323), 18. Januar 1986 & JP 60 166324 A (TEIJIN KK), 29. August 1985 in der Anmeldung erwähnt

## Beschreibung

Die Erfindung betrifft ein Verfahren zur kontinuierlichen Extraktion von Polyamiden, insbesondere Polyamid 6, wobei Polyamidteilchen in einer senkrechten Extraktionskolonne mit im Kreislauf geführter, wässriger ε-Caprolactamlösung behandelt werden.

Polyamid 6 (Polycaprolactam) wird durch Polymerisation von ε-Caprolactam hergestellt. Hierbei fällt Polycaprolactam mit einem Gehalt an Caprolactam und dessen Oligomeren von z. B. 8 bis 11 Gew.-% an. Diese niedermolekularen Bestandteile, im folgenden zusammenfassend als Extrakt bezeichnet, verändern die Eigenschaften des Polyamids in unerwünschter Weise. Daher muß der Extrakt vor der Weiterverarbeitung des Polyamids entfernt werden. Technisch geschieht das durch kontinuierliches oder diskontinuierliches Extrahieren mit heißem Wasser (DE-A-25 01 348, DE-A-27 32 328) und durch Abdestillieren im Vakuum (US-A 4,376,680) oder im überhitzten Wasserdampfstrom (EP 0 284 968 B1). All diese Verfahren werden aus Gründen des Umweltschutzes und der Wirtschaftlichkeit unter Rückgewinnung und Wiederverwendung des Extrakts durchgeführt. Der bei diesen Verfahren für Polyamid 6 erreichte, noch enthaltene Restextrakt (mit Methanol extrahierbare Bestandteile) besteht im Wesentlichen aus den in Wasser schwerlöslichen bzw. schwerflüchtigen Oligomeren des Caprolactams, insbesondere den Dimeren und den cyclischen Oligomeren.

Es wurden auch verschiedene Vorrichtungen zur Extraktion von niedermolekularen Bestandteilen aus Polyamiden vorgeschlagen. In der GB 12 97 606 wird eine in mindestens zwei Zonen aufgeteilte Extraktionskolonne offenbart, wobei das im Gegenstrom geführte Extraktionsmittel innerhalb jeder Zone entgegen der Flüssigkeitsströmung im Kreislauf geführt wird, indem es am oberen Ende der Zone entnommen und am unteren Ende der Zone wieder zugeführt wird. Ähnliche Vorrichtungen sind beispielsweise auch in der CZ 253 019, FR 15 18 775, DD 206 999 und DE-A-17 70 097 beschrieben.

Es ist bekannt, dass Caprolactam bei der Extraktion von Polyamid 6 als Lösungsvermittler gegenüber den Oligomeren des Lactams wirkt. Deshalb wird z. B. gemäß der JP-A-47 026438 das Granulat zur Entfernung der wasserlöslichen Anteile in Polyamid 6 mit einer Lösung von 15 bis 90 %, vorzugsweise 40 bis 70 % ε-Caprolactam in Wasser vorbehandelt. Gemäß DD 289 471 wird das Granulat mit 1 bis 40 % Caprolactam im Extraktionswasser bei Temperaturen oberhalb von 60 °C im Gegenstrom behandelt (die Prozentangaben beziehen sich jeweils auf das Gewicht). In der DE-A-43 24 616 wird ein Verfahren zur Extraktion von Polyamid 6, das zu Produkten mit sehr geringem Restgehalt an dimerem ε-Caprolactam führt, offenbart. Dabei schließt sich an eine erste Stufe, in der bei 80 bis 120 °C mit 41 bis 80 %iger Caprolactamlösung extrahiert wird, eine oder mehrere Nachextraktionsstufen entweder mit Wasser bei hoher Temperatur oder im Vakuum an. JP-A-48 002 233 beschreibt die Reinigung von Polycaprolactam durch Versetzen des geschmolzenen Polymers mit 5 bis 30 %iger Caprolactamlösung und die anschließende Reinigung der erhaltenen Dispersion bei 80 bis 120 °C in einer Extraktionskolonne. In der JP-A-53 071 196 wird Polyamid zunächst mit einem heißen, wässrigen Medium extrahiert und dann bei Temperaturen von 10 bis 50 °C unter dem Schmelzpunkt des Polyamids in einem Inertgasstrom gereinigt, wobei das heiße, wässrige Medium z. B. Wasser von 80 bis 130 °C mit weniger als 50 Gew.-% ε-Caprolactam umfasst. Die JP-A-45 025 519 offenbart einen mehrstufigen Extraktionsprozess, wobei das Polyamidgranulat in der ersten Stufe bei 70 bis 120 °C mit einer 5 bis 50 %igen wässrigen Caprolactamlösung und in der zweiten Stufe mit 0,1 bis 5 %iger wässriger Caprolactamlösung bei 70 bis 120 °C extrahiert wird. Die JP-A-51 149 397 beschreibt die Extraktion mit einer wässrigen 60 gew.-%igen ε-Caprolactamlösung bei 80 bis 120 °C für 3 bis 8 Stunden in der ersten Stufe und die Extraktion mit caprolactamfreiem Wasser, das vorzugsweise O₂-frei ist oder geringe Mengen eines reduzierenden Agens enthält, in der letzten Stufe. Auch diese Verfahren werden aus Gründen des Umweltschutzes und der Wirtschaftlichkeit vorzugsweise unter Rückgewinnung und Wiederverwendung des Extrakts durchgeführt. Demgemäß wird in der JP-A-60 166 324 eine Vorrichtung zur kontinuierlichen Extraktion von Polyamid 6 offenbart, in der das Granulat mit Wasser im Gegenstrom extrahiert wird, wobei man die Hauptmenge der Extraktionsflüssigkeit unter Zusatz von ε-Caprolactam im Kreislauf führt. Das Extraktionsmittel wird durch einen Ansaugstutzen abgepumpt, mit Caprolactam versetzt und über eine Verteilerdüse, die sich auf derselben Höhe wie der Ansaugstutzen befindet, in die Vorrichtung zurückgeführt. Die abgepumpte Extraktionslösung enthält lediglich 13,5 % Caprolactam, d. h. weniger als 20 %.

In der DE-A-195 05 150 werden die Oligomeren des Caprolactam durch Behandlung mit reinem Caprolactam als Extraktionsmittel bei 60 bis 150 °C aus Polyamidgranulat entfernt. Dieses Verfahren hat jedoch den Nachteil, dass anhaftendes Caprolactam bei den nachfolgenden Prozessschritten zum Verkleben des Granulats führen kann. Teilweise löst sich bei diesen Temperaturen auch das Granulat in Caprolactam.

Die Extraktion von Polyamidgranulat mit Wasser oder Wasserdampf führt nur mit erheblichem Aufwand zu den heute geforderten Restextraktgehalten < 0,5 %. Ebenso wie bei den Verfahren unter Verwendung von Caprolactam-haltigen Extraktionsmitteln fällt bei der Extraktion üblicherweise eine Lösung mit 5 bis 15 % Extraktgehalt an. Zusätzlich können noch anorganische Hilfsstoffe wie Titandioxid, Siliciumdioxid und Manganoxid enthalten sein, die dem Polyamid üblicherweise zur Stabilisierung oder Mattierung zugesetzt worden sind. Den Verfahren des Standes der Technik ist gemeinsam, dass entweder der Restextraktgehalt im Granulat zu hoch ist oder dass die wässrige Extraktlösung zur Rückführung des Caprolactams und seiner Oligomeren in die Polymerisation stark aufkonzentriert werden muss, wobei sich Oligomere und anorganische Hilfsstoffe abscheiden können. Das Aufkonzentrieren erfordert zudem erhebliche Energiemengen.

Aufgabe der Erfindung war es daher, ein Verfahren zur Entfernung von Oligomeren des Caprolactams aus Polyamid bereitzustellen, das ein Polyamid mit einem sehr niedrigen Restextraktgehalt bzw. Dimergehalt ergibt, ohne dass größere Mengen Extraktionsmittel mit niedrigem Extraktgehalt anfallen.

Diese Aufgabe wird erfindungsgemäß gelöst durch ein Verfahren zur kontinuierlichen Extraktion von Polyamidteilchen, insbesondere Polyamidgranulat oder -schnitzel, in einer im Wesentlichen senkrechten Extraktionskolonne mit einem wässrigen Extraktionsmittel, wobei das Verfahren dadurch gekennzeichnet ist, dass man eine in zwei Zonen unterteilte Extraktionskolonne verwendet und in der ersten Zone das Polyamid mit einem wässrigen Extraktionsmittel, das 40 bis 95 Gew.-% ε-Caprolactam enthält, bei einer Temperatur im Bereich von 95 bis 140°C im Kreislauf behandelt und dann in der zweiten Zone eine Nachbehandlung mit kaltem Wasser im Gegenstrom mit einer Strömungsgeschwingigkeit von 0,2 bis 6,0 m/h und mit einer Verweilzeit der Polyamidteilchen von 2 bis 60 min durchführt, wobei das Verhältnis des Rohrdurchmessers der ersten Zone zu demjenigen der zweiten Zone 8:1 bis 2:1 beträgt.

Das neue Verfahren hat den Vorteil, dass der Gehalt an Oligomeren des Caprolactams im Polyamid auf einfache Weise gesenkt wird, wobei das Extraktionsmittel die Oligomeren aufnimmt und eine Extraktlösung erhalten wird, die ohne oder nur mit geringer Aufarbeitung dem Polymerisationsreaktor zugeführt werden kann. Die Extraktion ergibt zudem erheblich schneller den gewünschten niedrigen Gehalt an Oligomeren als dies bei den Verfahren gemäß dem Stand der Technik erfolgt. Die weitere Extraktion des Caprolactams kann dann in an sich bekannter Weise erfolgen. So wird auf wirtschaftliche Weise ein Polyamid mit einem niedrigen Restextraktgehalt von weniger als 0,5 %, insbesondere weniger als 0,05 % Dimere, erhalten.

Außerdem hat sich gezeigt, dass eine hochkonzentrierte Extraktlösung mit geringem Wassergehalt anfällt, die gegebenenfalls ohne weitere Wasserverdampfung direkt wieder der Caprolactampolymerisation zugeführt werden kann.

Geeignete Polyamide sind Polycaprolactam oder Copolyamide, aufgebaut aus Caprolactam und weiteren Polyamid-bildenden Ausgangsstoffen, wobei der Anteil der sich von Caprolactam ableitet, vorzugsweise mindestens 20 Gew.-%, insbesondere mindestens 25 Gew.-% beträgt. Bevorzugte polyamidbildende Ausgangsstoffe sind Diamine und Dicarbonsäuren, die zur Bildung von Polyamiden geeignet sind. Geeignete Dicarbonsäuren sind beispielsweise Alkandicarbonsäure mit 6 bis 12 Kohlenstoffatomen, insbesondere 6 bis 10 Kohlenstoffatomen sowie Terephthal- und Isophthalsäure. Geeignete Diamine sind beispielsweise Alkandiamine mit 4 bis 12, insbesondere 6 bis 8 Kohlenstoffatomen, ferner m-Xylylendiamin, Bis-(4-aminophenyl)methan, Bis-(4-aminophenyl)propan-2,2 oder Bis-(4-aminocyclohexyl)methan. Dicarbonsäuren und Diamine können jeweils für sich in beliebigen Kombinationen, jedoch vorteilhaft im äquivalenten Verhältnis, verwendet werden. Besondere technische Bedeutung haben Polycaprolactam, Polyamide, die aus Caprolactam, Hexamethylendiamin sowie Adipinsäure, Isophthalsäure und/oder Terephthalsäure aufgebaut sind, erlangt.

In der Regel geht man von Polyamidgranulat mit einem Gehalt von 2 bis 15 Gew.-% Caprolactam und dessen Oligomeren, insbesondere 8 bis 12 Gew.-% Caprolactam und dessen Oligomeren aus. Im allgemeinen hat das Polyamidgranulat eine Granulatgröße von 1,5 x 1,5 mm bis 4 x 4 mm.

Die verwendeten Polyamide können zusätzlich übliche Additive wie Mattierungsmittel, z. B. Titandioxid, Keimbildner, z. B. Magnesiumsilicat, Stabilisatoren, z. B. Kupfer(I)halogenide und Alkalihalogenide, Antioxidantien sowie Verstärkungsmittel in üblichen Mengen enthalten. Die Additive werden in der Regel vor, während oder nach der Polymerisation und vor dem Granulieren zugesetzt.

Das Polyamid wird in eine im Wesentlichen senkrecht stehende, vorzugsweise rohrförmige Extraktionskolonne von oben aufgegeben. Das nach der Polymerisations- und anschließenden Granulierstufe erhaltene Polyamidgranulat kann beispielsweise über einen Transportwasserkreislauf der kontinuierlichen Extraktionskolonne zugeführt werden. Das Granulat wird über eine Abscheidevorrichtung (Sieb) vom Transportwasser getrennt und fällt mit einer Temperatur von beispielsweise 20 bis 90 °C in den Extraktorkopf. Es durchströmt die Extraktionskolonne aufgrund der Schwerkraft von oben nach unten und wird am unteren Ende der Extraktionskolonne über eine geeignete Vorrichtung, z. B. eine Schnecke, die vorzugsweise tiefgezogen ist, ausgetragen. Am Fuß der Extraktionssäule wird kontinuierlich kaltes Wasser zugeführt, das die Extraktionskolonne im Gegenstrom von unten nach oben durchläuft.

Im oberen Teil der Extraktionskolonne, der ersten Zone, die 60 bis 99 %, vorzugsweise 85 bis 99 % des Gesamtvolumens der Extraktionskolonne umfasst und deren Rohrdurchmesser das etwa 2- bis 10-fache derjenigen der zweiten Zone beträgt, wird das Extraktionsmittel im Kreislauf geführt. Dabei wird das Extraktionsmittel vorzugsweise im oberen Bereich abgezogen und im unteren Bereich der ersten Zone über eine Verteilungseinrichtung (vorzugsweise eine Ringdüse oder Lochplatte) gleichmäßig in die Kolonne zurückgeführt. Es kann aber auch umgekehrt verfahren werden, d. h. das Extraktionsmittel wird im unteren Bereich abgezogen und im oberen Bereich wieder zurückgeführt. Die in der ersten Zone umgewälzte Extraktionsmittelmenge wird dabei so gewählt, dass einerseits ein Temperatur- und Konzentrationsausgleich im Kopf sicher gestellt wird und ein intensiver Stoffaustausch an der Phasengrenzfläche der Polyamidteilchen stattfindet. Andererseits darf die Strömungsgeschwindigkeit des Extraktionsmittels den Wirbelpunkt der Teilchen nicht überschreiten. Demgemäß wird im Allgemeinen eine Geschwindigkeit von 2 bis 20 m/h, vorzugsweise von 3 bis 15 m/h eingestellt.

Bei einer alternativen Ausführungsform wird das frische Caprolactam direkt über eine erste Verteilungseinrichtung Ringdüse/Lochplatte im unteren Bereich der ersten Zone zugeführt. Das Extraktionsmittel wird oberhalb der ersten Verteilungseinrichtung im Kreislauf geführt, wobei der Kreislaufbereich im Allgemeinen etwa 35 % bis 65 % der Länge der ersten Zone umfasst. Das Extraktionsmittel wird dabei oberhalb der ersten Verteilungseinrichtung wieder zugeführt. Vorzugsweise wird das Extraktionsmittel im oberen Bereich der ersten Zone abgezogen und etwa in der Mitte der ersten Zone wieder zugeführt. Die Zufuhr erfolgt vorzugsweise über eine zweite Verteilungseinrichtung, bei der es sich im Allgemeinen um eine Ringdüse oder Lochplatte handelt. Alternativ kann frisches Caprolactam zusätzlich in den Kreislaufbereich der ersten Zone zugefahren werden.

Die Temperatur im Extraktor beträgt in der ersten Zone erfindungsgemäß 95 bis 140 °C, bevorzugt 115 bis 130 °C. Sie wird durch einen außerhalb der Extraktionskolonne im Extraktionsmittelkreislauf befindlichen Wärmetauscher eingestellt, so dass das eintretende Polyamid auf die gewünschte Temperatur aufgeheizt wird. Das Extraktionsmittel hat eine Caprolactamkonzentration von 40 bis 95 Gew.-%, vorzugsweise von 75 bis 95 Gew.-%. Dies wird durch Zugabe von flüssigem Caprolactam mit einer Temperatur von 80 bis 100 °C in den Kopfkreislauf erreicht, wobei in dem Maße, wie Wasser am Fuß der Kolonne und Caprolactam in den Kopfkreislauf zugesetzt wird, Extraktionsmittel in der ersten Zone ausgekreist wird. Es wird soviel frisches Caprolactam zugeführt, dass die Caprolactamkonzentration in der ersten Zone in dem genannten Bereich gehalten wird. Durch die hohe Caprolactamkonzentration wird die Abreicherung der Oligomeren des Caprolactams, insbesondere des Dimeren, aus dem Polyamid beschleunigt, wobei durch die günstigere Gleichgewichtslage ein niedrigerer Oligomergehalt im Polyamid erzielt werden kann als bei Extraktion mit reinem Wasser.

Die zweite Zone der Extraktionskolonne ist vorzugsweise ein schlankes, unbeheiztes Rohr. Die Querschnittsfläche wird so gewählt, dass eine vergleichsweise hohe Strömungsgeschwindigkeit von 0,2 bis 6,0 m/h, bevorzugt 1 bis 3 m/h, der aufsteigenden Flüssigphase aufrechterhalten werden kann, obwohl die am Fuß des Extraktors zugeführte Wassermenge zur Erreichung der gewünschten hohen Caprolactamkonzentrationen im Kopfkreislauf nur vergleichsweise gering ist. Insbesondere wird das Verhältnis der Querschnittsflächen der beiden Extraktionszonen so gewählt, dass ein Absinken des spezifisch schwereren, hochkonzentrierten Extraktionsmittels aus der ersten Zone des Extraktors in die darunterliegende zweite Zone verhindert wird. In der zweiten Zone findet aufgrund der niedrigeren Temperatur und der kurzen Verweilzeit nur in untergeordnetem Maße eine weitere Extraktion der Oligomeren statt. Sie dient im Wesentlichen der Entfernung von oberflächlich anhaftendem Caprolactam, um Verklebungen der Teilchen bei der Zwischenlagerung oder in den folgenden Prozessstufen zu vermeiden. Die Verweilzeit in der zweiten Zone muss so lange gewählt werden, dass ein für die Folgestufen (Verklebungsneigung) ausreichendes Abwaschen des Granulats stattfindet. Die Temperaturabsenkung in der zweiten Zone gegenüber der ersten Zone wirkt zusätzlich einem Absinken der spezifisch schwereren Extraktionsmittels aus der ersten Zone entgegen.

Die Verweilzeit des Polyamids in der ersten Zone beträgt im Allgemeinen 2 bis 10 Stunden, vorzugsweise 4 bis 6 Stunden. Die Verweilzeit in der darunterliegenden zweiten Zone liegt erfindungsgemäß bei 2 bis 60 Minuten, vorzugsweise bei 5 bis 30 Minuten. Im allgemeinen entfallen 60 bis 99 % der Extraktionszeit auf die erste Zone.

Der Austrag aus dem Extraktor wird vorzugsweise über eine Einwellen-Austragsschnecke vorgenommen, die das Polyamid kontinuierlich ohne Verlust an Extraktionsmittel austrägt und in einen Transportwasserkreislauf überführt. Die Austragsschnecke ermöglicht einen sehr gleichmäßigen und abriebfreien Austrag und verhindert Verbrückungen der Teilchen im Austragsteil. Über die Drehzahl der Einwellenschnecke lässt sich die ausgetragene Polyamidmenge und damit der Polyamidstand in der Extraktionskolonne regeln. Durch Zugabe geringer Wassermengen in den Transportwasserkreislauf, die durch die Schnecke in den Extraktor eintreten, wird in der Schnecke eine Flüssigkeitströmung entgegen dem austretenden Polyamid erzeugt und gleichzeitig im Fuß des Extraktors eine Aufwärtsströmung der Flüssigphase sichergestellt, die eine Rückvermischung verhindert.

Das aus der Extraktionskolonne ausgetragene Polyamid besitzt einen Restextraktgehalt von 4 bis 15 Gew.-%. Dieser besteht im Wesentlichen aus dem monomeren Caprolactam, während die Oligomere des Caprolactams und insbesondere das Dimer durch das erfindungsgemäße Verfahren zu einem erheblichen Anteil entfernt wurden. In dem Polyamid werden Dimerkonzentrationen < 0,1 Gew.-%, vorzugsweise < 0,05 Gew.-%, erzielt.

Die aus der ersten Zone ausgekreiste, hochkonzentrierte Extraktlösung kann erforderlichenfalls entweder zunächst in einer einstufigen oder mehrstufigen Eindampfanlage unter Entfernung von Wasser weiter aufkonzentriert werden. Gegebenenfalls kann sie aber auch ohne vorherige weitere Wasserentfernung direkt oder nach Zugabe von frischem Caprolactam in die Polymerisationsstufe zurückgeführt werden.

Durch die günstigere Gleichgewichtslage wird im Vergleich zum Stand der Technik ein kleineres Extraktionsmittel/Polyamid-Verhältnis von 1:1 bis 1:2 benötigt, wodurch die bei der Extraktwasseraufarbeitung zu verdampfende Wassermenge weiter verringert wird. Durch die hohe Konzentration von Caprolactam in der Extraktlösung wird außerdem eine störende Ausscheidung von Oligomeren des Caprolactams bei der Weiterverarbeitung der Extraktlösung vermieden.

Die weitere Entfernung von noch vorhandenen niedermolekularen Bestandteilen (Oligomere, Caprolactam etc.) aus dem extrahierten Polyamid kann mit verschiedenen, dem Fachmann bekannten, kostengünstigen Verfahren, die jedoch ohne die vorherige Oligomerenentfernung nicht zu den gewünschten niedrigen Restextraktgehalten führen, vorgenommen werden. Dies erfolgt insbesondere in der Schmelze im Vakuum oder bei Normaldruck, wobei gewünschtenfalls Wasserdampf eingespeist werden kann (Schmelzentlactamisierung im Dünnschichtapparat oder im Entgasungsextruder, siehe z. B. DE-A-39 32 793). Die Entfernung der niedermolekularen Bestandteile kann auch durch Behandlung des extrahierten Polyamidgranulats mit einem erhitzten Inertgas, insbesondere mit überhitztem wasserdampf, im Vakuum oder bei Normaldruck erfolgen.

### Kurzbeschreibung der Figuren:

- Fig. 1: zeigt eine schematische Darstellung einer ersten Ausführungsform einer Extraktionskolonne für das erfindungsgemäße Verfahren;
- Fig. 2: zeigt eine schematische Darstellung einer weiteren Ausführungsform einer Extraktionskolonne für das erfindungsgemäße Verfahren.

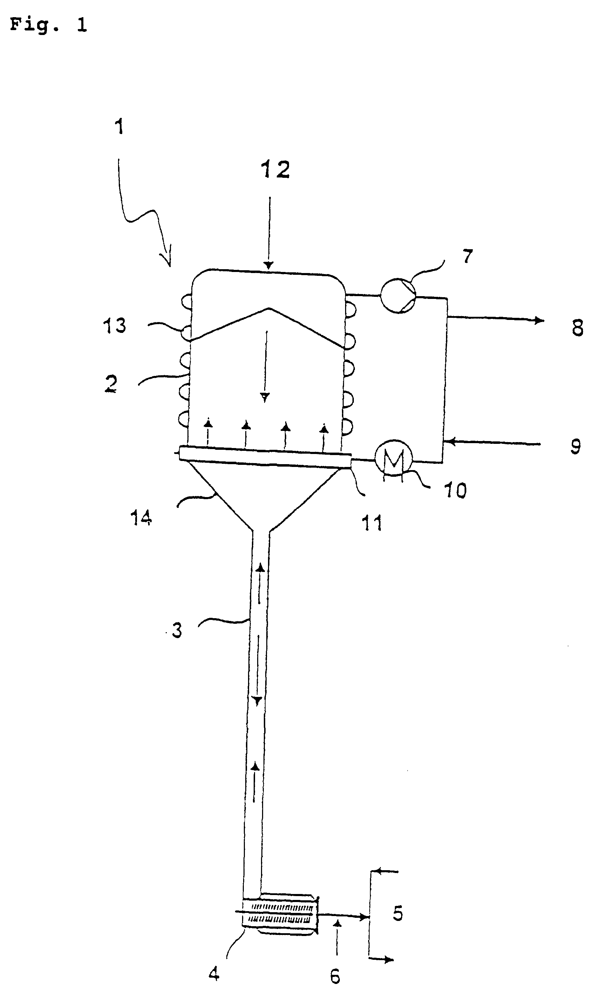

In der Figur 1 ist beispielhaft eine Extraktionskolonne für das erfindungsgemäße Verfahren schematisch dargestellt. Die Extraktionskolonne 1 umfasst eine erste (obere) rohrförmige Zone 2 und eine zweite (untere) rohrförmige Zone 3, die durch einen trichterförmigen Abschnitt 14 miteinander verbunden sind. Das Verhältnis der Länge der ersten Zone 2 zu derjenigen der zweiten Zone 3 liegt im Allgemeinen im Bereich von 1:5 bis 5:1, vorzugsweise 1:2 bis 2:1. Das Verhältnis des Rohrdurchmessers der ersten Zone 2 zu demjenigen der zweiten Zone 3 liegt im Allgemeinen im Bereich von 8:1 bis 2:1, vorzugsweise 6:1 bis 3:1.

Das Polyamidgranulat 12 wird von oben in die erste Zone 2 eingetragen, durchläuft diese von oben nach unten und anschließend die rohrförmige zweite Zone 3 und wird dann über die Austragsschnecke 4 in den Transportwasserkreislauf 5 ausgetragen. Frischwasser 6 wird nach Bedarf durch die Austragsschnecke 4 der Extraktionskolonne 1 zugeführt. Beim Durchlaufen der Extraktionskolonne 1 nimmt das Wasser in der zweiten Zone 3 zunächst Caprolactam auf und vermischt sich dann im unteren Teil der ersten Zone 2 mit dem dort im Kreislauf geführten Extraktionsmittel. Dieses wird im oberen Teil der ersten Zone 2 durch eine Pumpe 7 entnommen, über einen Wärmetauscher 10, durch den die Temperatur im gewünschten Bereich gehalten wird, geführt und über eine Lochplatte 11 im unteren Bereich der ersten Zone 2 wieder zugeführt. Ein Teil des Extraktionsmittels wird an 8 ausgekreist und über 9 wird soviel frisches Caprolactam und über 6 soviel Wasser zugeführt, dass die Caprolactamkonzentration im Extraktionsmittel im gewünschten Bereich gehalten wird. Die obere Zone 2 kann gegebenenfalls zusätzlich durch Mantelrohre 13 beheizt werden, während die zweite Zone 3 nicht extern erwärmt, aber gegebenenfalls gekühlt werden kann.

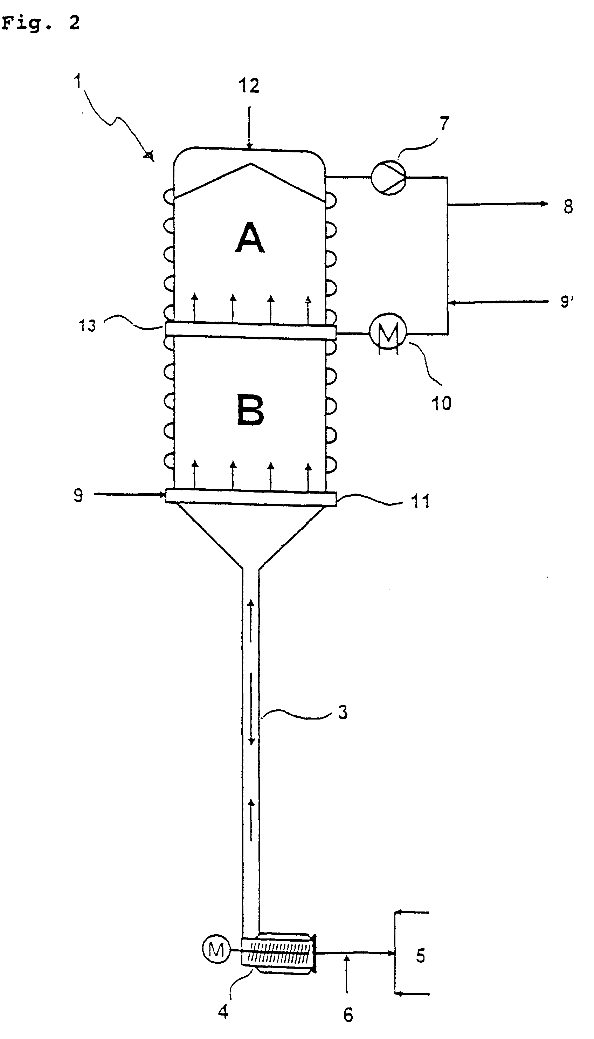

Eine weitere Ausführungsform einer für das erfindungsgemäße Verfahren brauchbaren Extraktionskolonne ist in Fig. 2 gezeigt. Die Extraktionskolonne 1 umfasst eine erste (obere) Zone 2 und eine zweite (untere) Zone 3. Das Verhältnis der Länge der ersten Zone 2 zu derjenigen der zweiten Zone 3 liegt dabei im Allgemeinen im Bereich von 1:5 bis 5:1, vorzugsweise 1:2 bis 2:1. Das Verhältnis der Rohrdurchmesser ist wie bei Fig. 1 angegeben. Die Bereiche A und B erstrecken sich über die etwa gleiche Länge.

Die Extraktion verläuft im Prinzip wie bei Fig. 1 beschrieben. Im Unterschied dazu umfasst der Extraktionsmittelkreislauf nur den oberen Teil A der ersten Zone 2, d. h. das Extraktionsmittel wird im oberen Bereich der ersten Zone 2 abgezogen und in deren mittleren Bereich über eine zweite Ringdüse 13 wieder zugeführt. Frisches Caprolactam wird bei 9 über eine erste Ringdüse 11, die sich im unteren Bereich der ersten Zone 2 befindet, zugegeben. Ein Teil des Caprolactam kann auch bei 9' direkt in den Kopfkreislauf geführt werden. Auf diese Weise kann im Extraktor der Caprolactamgradient gezielt beeinflusst werden. Das Polyamidgranulat 12 wird also zunächst im oberen Bereich A im Kreislauf mit dem Extraktionsmittel und dann im unteren Bereich B mit Caprolactam im Gegenstrom behandelt. Man erhält auf diese Weise ein Polyamid mit besonders geringem Dimergehalt (< 0,05 %).

Die folgenden Beispiele sollen das erfindungsgemäße Verfahren weiter veranschaulichen.

### Beispiele

Das eingesetzte, unextrahierte Polyamid 6-Granulat hat einen Caprolactamgehalt von 9,0 % und einen Dimergehalt von 0,63 %. Es besitzt ein mittleres Korngewicht von 12,5 bis 14,5 mg und eine zylindrische Form mit Abmessungen von etwa 3 x 2 mm.

### Beispiel 1

Man verwendet eine Extraktionskolonne gemäß Figur 1 mit einer Länge der ersten Zone 2 von 4400 mm und einem Durchmesser von 210 mm. Es werden kontinuierlich 20 kg/h unextrahiertes Polyamid 6-Granulat 12 aufgegeben. Am Fuß der Extraktionskolonne 1 werden kontinuierlich 4,2 kg/h Frischwasser 6 mit einer Temperatur von 20 °C zugeführt. Die Länge der rohrförmigen zweiten Zone 3 beträgt 4000 mm bei einem Durchmesser von 50 mm. In der ersten Zone 2 werden 0,4 m³/h Extraktionsmittel mit einer Umwälzpumpe 7 entnommen und nach Passieren eines Wärmetauschers 10 über eine Lochplatte 11 in die Zone 2 zurückgeführt. Die Temperatur wird über den Wärmetauscher auf 125 °C eingestellt. In den Kreislauf werden vor dem Wärmetauscher 17 kg/h flüssiges Caprolactam 9 zudosiert, so dass eine Caprolactamkonzentration von 80 % in der Zone 2 aufrechterhalten wird. Das durch die Austragsschnecke 4 ausgetragene Granulat besitzt einen Restextraktgehalt von 14 % und einen Dimergehalt von 0,11 %. 200 g dieses Granulats werden diskontinuierlich über einen Zeitraum von 24 Stunden mit 1000 g/h überhitztem Wasserdampf bei einer Temperatur von 180 °C und unter Normaldruck behandelt. Das resultierende Polyamid 6-Granulat hat einen Restextraktgehalt von 0,3 % und einen Dimergehalt von 0,05 %.

### Vergleichsbeispiel 1

200 g unextrahiertes Polyamid 6-Granulat werden diskontinuierlich über einen Zeitraum von 24 Stunden mit 1000 g/h überhitztem Wasserdampf bei einer Temperatur von 180 °C und unter Normaldruck durchströmt. Man erhält einen Gehalt an extrahierbaren Bestandteilen von 0,9 % und einen Dimergehalt von 0,4 %.

### Beispiel 2

200 g des wie unter Beispiel 1 vorbehandelten Granulats werden diskontinuierlich über einen Zeitraum von 24 Stunden mit 70 g/h überhitztem Wasserdampf bei einer Temperatur von 180 °C und einem Druck von 70 mbar durchströmt. Man erhält einen Restextraktgehalt von 0,2 % und einen Dimergehalt von 0,04 %.

### Vergleichsbeispiel 2

200 g unextrahiertes Polyamid 6-Granulat werden wie unter Beispiel 2 beschrieben behandelt. Man erhält einen Restextraktgehalt von 0,9 % und einen Dimergehalt von 0,4 %.

### Beispiel 3

Das wie unter Beispiel 1 vorbehandelte Granulat wird über einen Entgasungsextruder (ZSK 25, Fa. Werner u. Pfleiderer) mit zwei Entgasungsdomen und abgestuftem Vakuum (120 mbar, < 10 mbar, 280 bis 290 °C) behandelt. Der Durchsatz beträgt 5 kg/h. Man erhält ein Polyamidgranulat mit einem Restextraktgehalt von 0,5 % und einem Dimergehalt von 0,03 %.

### Vergleichsbeispiel 3

Die Behandlung im Extruder wird analog zu Beispiel 3 mit unextrahiertem Polyamid 6-Granulat wiederholt. Man erhält einen Restextraktgehalt von 1,9 % und einen Dimergehalt von 0,55 %.

### Beispiel 4

Das wie unter Beispiel 1 vorbehandelte Granulat wird in einem Entgasungsextruder (ZSK 25) mit zweistufiger Flashentgasung unter Normaldruck und gleichzeitiger Einspeisung von Wasserdampf behandelt. Die Schmelztemperaturen in den Entgasungszonen liegen bei 280 bis 300 °C. Der Durchsatz beträgt 5 kg/h. Das Polyamid hat einen Restextraktgehalt von 0,6 % und einen Dimergehalt von 0,05 %.

### Vergleichsbeispiel 4

Man verfährt mit unextrahiertem Polyamidgranulat analog zu Beispiel 4 und erhält einen Restextraktgehalt von 2,1 % und einen Dimergehalt von 0,55 %.

Die Beispiele und Vergleichsbeispiele zeigen, dass durch das erfindungsgemäße Verfahren der Restextraktgehalt und insbesondere der Dimergehalt von Polyamid 6-Granulat bei der Extraktion deutlich gesenkt wird.

## Patentansprüche

1. Verfahren zur kontinuierlichen Extraktion von Polyamidteilchen mit einem wässrigen Extraktionsmittel in einer im Wesentlichen senkrechten Extraktionskolonne, **dadurch gekennzeichnet, dass** man eine in zwei Zonen unterteilte Extraktionskolonne verwendet und in einer ersten Zone das Polyamid mit einem wässrigen Extraktionsmittel, das 40 bis 95 Gew.-% ε-Caprolactam enthält, bei einer Temperatur im Bereich von 95 bis 140 °C im Kreislauf behandelt und dann in einer zweiten Zone eine Nachbehandlung mit kaltem Wasser im Gegenstrom mit einer Strömungsgeschwindigkeit von 0,2-6,0 m/h und mit einer Verweilzeit der Polyamidteilchen von 2 bis 60 min durchführt, wobei das Verhältnis des Rohrdurchmessers der ersten Zone zu demjenigen der zweiten Zone 8:1 bis 2:1 beträgt.

2. Verfahren nach Anspruch 1, **dadurch gekennzeichnet, dass** das Extraktionsmittel in der ersten Zone durch Entnahme im oberen Bereich und Zufuhr in den unteren Bereich im Kreislauf geführt wird.

3. Verfahren nach Anspruch 1, **dadurch gekennzeichnet, dass** das Extraktionsmittel über einen Teilbereich der ersten Zone im Kreislauf geführt wird.

4. Verfahren nach Anspruch 3, **dadurch gekennzeichnet, dass** das Extraktionsmittel im Kreislauf geführt wird, indem es im oberen Bereich entnommen und im mittleren Bereich wieder zurückgeführt wird.

5. Verfahren nach einem der vorhergehenden Ansprüche, **dadurch gekennzeichnet, dass** soviel der in der ersten Zone im Kreislauf geführten Extraktionslösung ausgekreist und durch frisches Caprolactam und Wasser am Fuß der Extraktionskolonne ersetzt wird, dass sich in der ersten Zone der Caprolactamgehalt von 40 bis 95 Gew.-% einstellt.

6. Verfahren nach Anspruch 5, **dadurch gekennzeichnet, dass** das Caprolactam in den Kreislaufstrom und/oder direkt in den unteren Bereich der ersten Zone gegeben wird.

7. Verfahren nach einem der vorhergehenden Ansprüche, **dadurch gekennzeichnet, dass** das Gewichtsverhältnis von Extraktionslösung zu dem Polyamid in der ersten Zone im Bereich von 1:1 bis 1:2 liegt.

8. Im wesentlichen senkrechte Extraktionskolonne zur Durchführung des Verfahrens nach Anspruch 1, die umfasst:
eine erste Zone (2) mit Mitteln zum Zuführen und Abnehmen eines Extraktionsmittels,
eine mit der ersten Zone (2) verbundene zweite Zone (3),
wobei das Verhältnis der Länge der ersten Zone (2) zu derjenigen der zweiten Zone (3) im Bereich von 1:5 bis 5:1 liegt und
das Verhältnis der Rohrdurchmesser der ersten Zone (2) zu derjenigen der zweiten Zone (3) im Bereich von 8:1 bis 2:1 liegt.

9. Extraktionskolonne nach Anspruch 8, **dadurch gekennzeichnet, dass** die erste Zone (2) über einen trichterförmigen Abschnitt (14) mit der zweiten Zone (3) verbunden ist.

10. Extraktionskolonne nach Anspruch 8 oder 9, **dadurch gekennzeichnet, dass** die Mittel zum Zuführen des Extraktionsmittels eine Ringdüse oder Lochplatte (11) umfassen.

## Claims

1. A process for continuous extraction of polyamide particles using an aqueous extractant in an essentially vertical extraction column, which comprises using an extraction column that is divided into two zones, treating the polyamide with a recirculating aqueous extractant comprising from 40 to 95% by weight of ε-caprolactam in a first zone at a temperature within the range from 95 to 140°C, and then effecting a countercurrent aftertreatment with cold water in a second zone at a flow rate of from 0.2 to 6.0 m/h and with a residence time of the polyamide particles of from 2 to 60 minutes, the ratio of the tube diameter of the first zone to that of the second zone being within the range from 8:1 to 2:1.

2. A process as claimed in claim 1, wherein the extractant is recirculated in the first zone by removing it in the top region and feeding it into the bottom region.

3. A process as claimed in claim 1, wherein the extractant is recirculated within a subregion of the first zone.

4. A process as claimed in claim 3, wherein the extractant is recirculated by removing it from the top region and reintroducing it in the middle region.

5. A process as claimed in any of the preceding claims, wherein a sufficient amount of the extract recirculating in the first zone is removed and replaced by fresh caprolactam and water at the base of the extraction column to establish the caprolactam content of from 40 to 95% by weight in the first zone.

6. A process as claimed in claim 5, wherein the caprolactam is introduced into the recirculating stream and/or directly into the bottom region of the first zone.

7. A process as claimed in any of the preceding claims, wherein the weight ratio of extraction solution to the polyamide in the first zone is within the range from 1:1 to 1:2.

8. An essentially vertical extraction column for carrying out the process of claim 1, comprising:
a first zone (2) having means for feeding and removing an extractant,
a second zone (3) connected to the first zone (2),
the ratio of the length of the first zone (2) to that of the second zone (3) being within the range from 1:5 to 5:1, and
the ratio of the tube diameters of the first zone (2) to those of the second zone (3) being within the range from 8:1 to 2:1.

9. An extraction column as claimed in claim 8, wherein the first zone (2) is connected to the second zone (3) via a funnel-shaped section (14).

10. An extraction column as claimed in claim 8 or 9, wherein the means for feeding the extractant comprise an annular nozzle or perforated plate (11).

## Revendications

1. Procédé d'extraction en continu de particules de polyamide à l'aide d'un agent d'extraction aqueux dans une colonne d'extraction sensiblement verticale, **caractérisé en ce qu'**on utilise une colonne d'extraction subdivisée en deux zones et, dans une première zone, on traite en circuit le polyamide avec un agent d'extraction aqueux, qui contient 40 à 95% en poids d'ε-caprolactame, à une température de l'ordre de 95 à 140°C, et puis, dans une deuxième zone, on effectue un post-traitement avec de l'eau froide en contre-courant à une vitesse d'écoulement de 0,2-6,0 m/h et avec une durée de séjour des particules de polyamide de 2 à 60 minutes, le rapport entre le diamètre tubulaire de la première zone et celui de la deuxième zone étant de 8/1 à 2/1.

2. Procédé suivant la revendication 1, **caractérisé en ce que** l'agent d'extraction dans la première zone est guidé en circuit par prélèvement dans une région supérieure et amenée dans la région inférieure.

3. Procédé suivant la revendication 1, **caractérisé en ce que** l'agent d'extraction est guidé en circuit par l'intermédiaire d'une région partielle de la première zone.

4. Procédé suivant la revendication 3, **caractérisé en ce que** l'agent d'extraction est guidé en circuit en étant prélevé dans une région supérieure et en étant recyclé dans une région centrale.

5. Procédé suivant l'une des revendications précédentes, **caractérisé en ce que** suffisamment de la solution d'extraction guidée en circuit dans la première zone est sortie du circuit et remplacée par du caprolactame frais et de l'eau au pied de la colonne d'extraction pour que la teneur en caprolactame de 40 à 95% en poids s'ajuste dans la première zone.

6. Procédé suivant la revendication 5, **caractérisé en ce que** le caprolactame est versé dans le courant de circuit et/ou directement dans la région inférieure de la première zone.

7. Procédé suivant l'une des revendications précédentes, **caractérisé en ce que** le rapport pondéral entre la solution d'extraction et le polyamide dans la première zone est de l'ordre de 1/1 à 1/2.

8. Colonne d'extraction sensiblement verticale pour la mise en oeuvre du procédé suivant la revendication 1, comprenant :
une première zone (2) avec des moyens pour amener et retirer un agent d'extraction,
une deuxième zone (3) reliée à la première zone (2),
le rapport entre la longueur de la première zone (2) et celle de la deuxième zone (3) étant de l'ordre de 1/5 à 5/1, et
le rapport entre le diamètre tubulaire de la première zone (2) et celui de la deuxième zone (3) étant de l'ordre de 8/1 à 2/1.

9. Colonne d'extraction suivant la revendication 8, **caractérisée en ce que** la première zone (2) est reliée à la deuxième zone (3) par l'intermédiaire d'une section en forme d'entonnoir (14).

10. Colonne d'extraction suivant l'une des revendications 8 et 9, **caractérisée en ce que** les moyens pour amener l'agent d'extraction comprennent un ajutage annulaire ou une plaque à trous (11).
